(19) Europäisches Patentamt
European Patent Office
Office européen des brevets

(11) Publication number : 0 287 398 B1

(12) # EUROPEAN PATENT SPECIFICATION

(45) Date of publication of patent specification : 03.07.91 Bulletin 91/27

(51) Int. Cl.$^5$ : C08J 3/24

(21) Application number : 88303439.9

(22) Date of filing : 15.04.88

(54) **Process for curing vulcanizable materials by means of a liquid heat transmitter.**

(30) Priority : 17.04.87 IT 2016787

(43) Date of publication of application : 19.10.88 Bulletin 88/42

(45) Publication of the grant of the patent : 03.07.91 Bulletin 91/27

(84) Designated Contracting States : CH DE FR GB LI NL SE

(56) References cited :
EP-A- 0 106 754
US-A- 3 959 558
DATABASE WPIL (Derwent), no. 83-774177
DATABASE WPIL (Derwent), no. 84-211446
DATABASE WPIL (Derwent), no. 85-023074

(73) Proprietor : AUSIMONT S.r.l.
31, Foro Buonaparte
I-20100 Milano (IT)

(72) Inventor : Johns, Ken
62, School Road
Ashford Middlesex (GB)
Inventor : Re, Alberto
40, via Lamarmora
I-20122 Milan (IT)
Inventor : Bargigia, Gianangelo
47, via F. Chopin
I-20141 Milan (IT)

(74) Representative : Whalley, Kevin et al
MARKS & CLERK 57/60 Lincoln's Inn Fields
London WC2A 3LS (GB)

EP 0 287 398 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a process for curing vulcanizable materials by means of a liquid heat transmitter, in particular a process for the thermal vulcanization of thermosetting resins or vulcanizable elastomers or copolymers.

The present invention especially relates to a process for carrying out the hot cure of thermosetting resins or vulcanizable elastomers, based on the use of a specific product, in the liquid state, to transmit heat to the material that has to be cured, in order to heat said material to a temperature that has been pre-established for the curing process.

In Japanese Patent No. JP-58141213 a method is described for curing, in the liquid phase, thermosetting resins such as epoxy resins, unsaturated polyesters, polyurethane and polybutadiene resins, by using, as liquid medium, glycerin, ethylene glycol and wax or petroleum resins (paraffins), which are liquid at the processing temperature.

Also in Swedish Patent No. SE-6714/82 a process is described for curing a resin strengthened with fiber glass, in the liquid phase, by using, for the heat transmission, liquids similar to those mentioned above.

The above-mentioned processes do not lead to results useful to the electronics industry because, for instance, the electrical conductivity of the cured resins, when they are used for electronic circuits, is not high enough.

Moreover the liquid transmitters mentioned above do not provide the necessary high chemical inertia as to the vulcanizable material, in order to obtain high quality manufactures.

A few known processes concerning the vulcanization of thermosetting resins make use of a saturated vapor coming from a liquid kept at the boiling temperature, as heating medium. See in this connection U.S. Patent No. US-A-4,517,356. This method, although it allows curing at a perfectly controlled and homogeneous temperature in a very short time and with good results, presents, however, the drawback that the operating temperature is determined by the boiling point of the liquid which has been used, and should it be necessary to change this temperature to adjust it to a different kind of resin or to a different process, the liquid has to be changed as well.

We have now surprisingly found that, by using a specific liquid as heating medium, the drawbacks concerning the above mentioned vulcanization in the vapor phase may be overcome and a better process in the liquid phase may be provided, to be used, in particular, for the electronics industry.

The present invention provides a process for curing vulcanizable materials, in particular thermosetting resins or vulcanizable elastomers or copolymers, comprising contacting an article to be cured with a process liquid at a pre-established temperature for a sufficient time in order to obtain complete vulcanization, characterized in that said liquid is a perfluoropolyether.

The process according to the present invention allows the most convenient conditions of temperature to be selected, using the same liquid.

Moreover, while a process that make use of a heating fluid in the vapor phase, needs complicated apparatuses in order to avoid losses of the liquid product due to vapor escape, in the process according to the present invention the loss of the liquid product due to evaporation may be very low, when a liquid is selected having a low vapor tension.

Another advantage of the process according to the present invention is that it allows a multi-step curing process to be carried out, with different vulcanization temperatures in each step, by using the same liquid in all the steps ; in the vapor phase, on the contrary, use has to be made in each step of a different kind of liquid having a different boiling point, corresponding to the temperature conditions of each step, but in practice the possibility of changing the thermal profile of each step is limited by the nature of the system.

In general, a vapor phase system involves the pollution of the new liquid with the old one, when the liquids change from one step to the other.

The process of the present invention consists essentially in bringing into contact the article to be cured with the process liquid kept at a pre-established temperature and for a period of time sufficient to obtain the complete vulcanization.

The contact between the process liquid and the material to be cured can be obtained in the most simple way, by dipping the article into a bath containing the liquid at the desired temperature. Alternatively it can be carried out by means of a customary spray system or by dipping into a film of liquid.

In the case of dipping into a bath the heat-exchange coefficient can be improved by keeping the liquid under stirring.

The liquid products used as heat transmitters in the process according to the invention belong to the class of perfluoropolyethers of neutral kind, namely without reactive terminals, having perfluoroalkyl terminals and very low vapor tension under the process conditions.

For instance at 150°C the evaporation loss according to ASTM D 976/56 is lower than 1% by weight. Perfluoropolyethers having a kinematic viscosity at 20°C ranging from 10 to 2500 Cst ($mm^2/s$) may be suitably used in the present invention.

The perfluoropolyethers preferably used in the present invention have a perfluoropolyethereal structure, comprising structural units of the following kinds :

(1) ($CF(CF_3)CF_2O$) and (CFXO) randomly distributed along the perfluoropolyethereal chain, wherein X is F or $-CF_3$ ;

(2) ($CF(CF_3)CF_2O$) ;

(3) ($CF(CF_3)CF_2O$), and which comprises the characteristic structural unit $-CF(CF_3)-CF(CF_3)-$ ;

(4) ($CF(CF_3)CF_2O$), ($C_2F_4O$), (CFXO) randomly distributed along the perfluoropolyethereal chain, wherein X is F or $CF_3$ ;

(5) ($C_2F_4O$), ($CF_2O$) randomly distributed along the perfluoropolyethereal chain ;

(6) ($CF_2$-$CF_2$-$CF_2O$) ;

(7) ($C_2F_4O$) ;

(8) 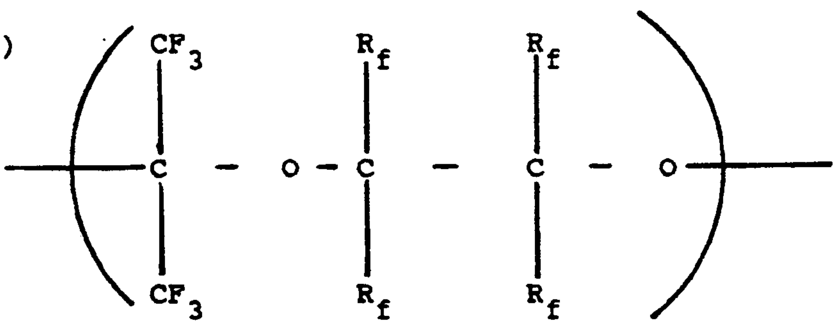

wherein $R_f$ is F or a perfluoroalkyl radical ; and such that the visocosity, measured at 20°C, is at least 10 Cst and at most 2500 Cst ($mm^2/s$).

The perfluoropolyethers containing the units mentioned above are known and are selected preferably among the following classes :

(1) 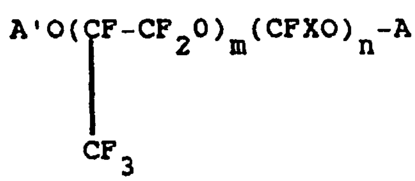

wherein X is $-F$ or $-CF_3$ ; A and A', which may be the same or different, may be $-CF_3$, $C_2F_5$, $C_3F_7$ ; the ($CF(CF_3)CF_2O$) and CFXO units are randomly distributed along the perfluoropolyethereal chain ; m and n are whole numbers, n may be O and the m/n ratio is 2 when n = O ; and such that the viscosity ranges from 10 to 2500 Cst ($mm^2/s$).

These perfluoropolyethers have been obtained by photo-oxidation reaction of hexafluoropropene according to the process described in U.K. Patent No. GB-A-1,104,482 and by subsequent conversion of the terminal groups into inert groups according to the process described in U.K. Patent No. GB-A-1,226,566.

(2) 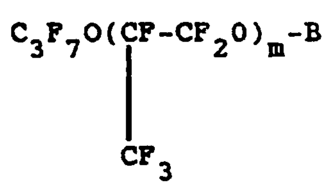

wherein B may be $-C_2F_5$ or $-C_3F_7$, and m is a positive whole number, and such that the viscosity of the product is within the range indicated hereinbefore.

These compounds have been prepared by ionic oligomerization of hexafluoropropene epoxide and subsequent treatment of acyl fluoride (COF) with fluorine, according to the processes described in U.S. Patent No.

US-A-2,242,218.

(3) 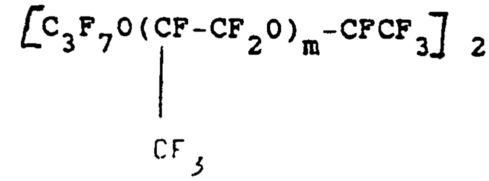

wherein m is a whole number, and such that the product viscosity is within the range indicated hereinbefore.

These products have been obtained by ionic telomerization of hexafluoropropene epoxide and subsequent photochemical dimerization of acyl fluoride, according to the processes dscribed in U.S. Patent No. US-A-3,214,478.

$$\text{(4) } A'O\,[CF(CF_3)CF_2O]_{m}\text{-}(C_2F_4O)_n(CFXO)_qA \quad (4)$$

wherein A and A', which may be the same or different, may be $-CF_3$, $-C_2F_5$, $-C_3F_7$ ; X is –F or $-CF_3$ ; m, n and q are whole numbers or may be equal to O as well ; and such that the viscosity is within the range indicated hereinbefore.

These products have been obtained by photo-oxidation of mixtures of $C_3F_6$ and $C_2F_4$ and subsequent treatment with fluorine, according to the process described in U.S. Patent No. US-A-3,655,041.

$$\text{(5) } CF_3O(C_2F_4O)_p(CF_2O)_q\text{-}CF_3 \quad (5)$$

wherein p and q are whole numbers, which may be the same or different, in which the p/q ratio ranges from 0.5 to 2 ; and such that the viscosity is within the range indicated hereinbefore.

These perfluoropolyethers have been prepared according to what is described in U.S. Patent No. US-A-3,715,378, subsequently treated with fluorine according to U.S. Patent No. US-A-3,665,041.

$$\text{(6) } AO\text{-}(CF_2\text{-}CF_2\text{-}CF_2O)_m\text{-}A' \quad (6)$$

wherein A and A', which may the same or different, may be $-CF_3$, $-C_2F_5$, $-C_3F_7$, and m is a whole number, and such that the product viscosity is within the range indicated hereinbefore.

These products have been obtained according to European Patent No. EP-A-148,482.

$$\text{(7) } DO\text{-}(CF_2\text{-}CF_2O)_rD' \quad (7)$$

wherein D and D', which may be the same or different, may be $-CF_3$, $-C_2F_5$, and r is a whole number, and such that the product viscosity is within the range indicated hereinbefore.

These products have been obtained according to U.S. Patent No. US-A-4,523,039.

(8) 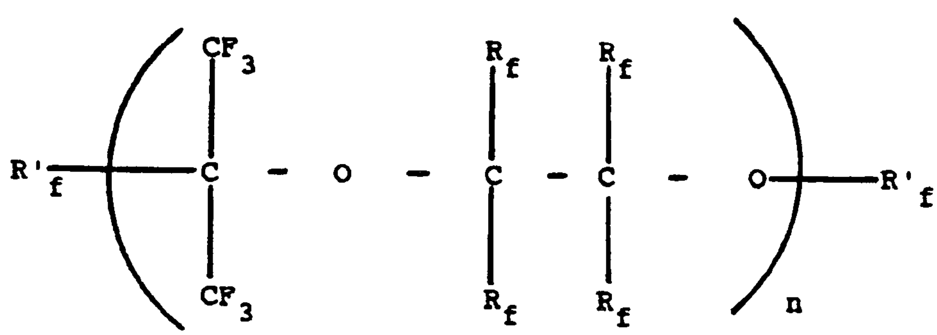

wherein $R'_f$ is a perfluoroalkyl radical, n is at least 8, and $R_f$ is F or a perfluoroalkyl radical.

These perfluoropolyethers are descibred in patent application no. PCT WO 87/00538.

The above described perfluoropolyethers exhibit a high degree of the following properties :

– inflammability ;

– stability at high temperatures ;

- good coefficient of heat transfer ;
- chemical inertia ;
- lack of solid residue ;
- good compatibility with the materials used in electronic apparatuses ;
- low viscosity at the utilization temperatures ;
- low surface tension (good wettability and drainage) ;
- high specific heat.

The characteristic that first differentiates the liquid product utilized in the present invention from those of the prior art is high compatibility of such products with all the thermosetting resins, such as epoxy, polyurethane, polyester, acrylic, polybutadiene, polyimide resins. The compatibility is based substantially on the following properties :

- lack of any chemical reaction with the resin before, during and after curing ;
- no (or very low) capability of dissolving the resin and lack of absorption and/or of gelling phenomena before, during or after curing.

Another advantageous characteristic of the perfluoropolyesters mentioned hereinbefore for use in the present invention, is their lack of toxicity, smell or irritant properties.

According to a further aspect of the present invention, the curing process may be carried out in combination, simultaneously or in sequence, with electronic radiation, U.V. radiation, microwaves or supersonants ; these different energetic sources may be used singly or together.

An advantage of the use of U.V. radiation in combination with the vulcanization in the liquid phase of the present invention is that the harmful effects of atmospheric oxygen are eliminated, inhibiting strongly induced radical polymerization.

By using microwaves in combination with the present process, the excess energy coming from the microwaves, particularly in polymers containing a metal, may be dissipated by the fluid, in order to improve the thermal control of the system.

By using supersonants (supersonic energy) in combination with the thermal treatment of the present invention, it is possible to exploit the heat that is generated internally by the supersonants and, at the same time, the heat supplied from outside by the liquid medium utilized in the present invention.

The vulcanization in the liquid phase according to the present invention allows the rate of the surface vulcanization to be controlled or to be increased in order to provide a better, non-sticky surface, cured outside, but allowing at the same time preliminary handling before the complete vulcanization.

Therefore the complete vulcanization may be carried out by using a curing agent in the liquid phase, optionally in the presence of the energetic sources mentioned hereinbefore.

For the practical application of the process of the present invention the contact between the heating liquid and the article to be heated may be carried out in several ways, for instance.

- by dipping into the liquid,
- by spraying of the liquid,
- by passing through a wave of liquid.

Should the resin to be cured be present on particularly complicated articles, comprisingly for instance electronic components, which are fastened during the curing process on printed circuits, it is sometimes advisable, in order to avoid some shifting of the components, to wrap the articles in polymeric films, which are resistant at the utilization temperature of the liquid.

Such polymeric film can be used in order to restrain volume increase taking place during the vulcanization and/or gas elimination during the starting vulcanization step and therefore to act as a continuous heat transmitter.

The wrapping may be carried out according to the techniques of vacuum wrapping or shrink wrapping.

In fact, it has been shown that such films do not adversely influence the rate of heat transmission from the liquid to the resin to be cured.

The protective film can be also used to avoid the inclusion of the heating liquid in highly delicate manufactures such as, for instance, printed circuits comprising electronic components, which can be sensitive to the liquid.

The articles subjected to the process according to the invention can be washed afterwards with a specific solvent in order to remove the residual heating liquid. Suitable solvents are fluorinated or chlorofluorinated hydrocarbons such as Algofrene® 113.

As practical examples of the application of the present invention there can be mentioned the vulcanization of parts of epoxy resins present in printed circuits, coatings consisting of thermosetting resins, and couplings achieved by using thermosetting resins as binders.

The resin that can be cured according to the present invention is any vulcanizable material which can be

cured by thermal treatment. As above mentioned, examples of such materials are thermosetting resins, thermally vulcanizable thermoplastic compositions, for instance PVC containing plastisol, elastomeric compositions such as EPR and EPDM, and cross linkable polymers such as polyolefins XLPE, CPE, CSM.

With the process of the present invention it is possible to reduce, eliminate or modify some additives used for curing the resins, i.e. catalysts, accelerators, initiators and curing agents such as peroxides.

As the temperature is well controlled and the process is carried out with lack of oxidative degradation, it is possible to operate at higher temperatures compared with those of the customary systems.

The temperature control together with the high speed of heat transmission may allow a quick and effective vulcanization at lower temperatures than those used previously in the prior art.

The invention will be further described with reference to the following illustrative Examples.

EXAMPLE 1

There was prepared a mixture consisting of 100 parts of weight of an epoxy resin made from bisphenol A and epichlorohydrin, having epoxy equivalent weight equal to 190, 90 parts by weight of methyl-endomethylene-tetrahydrophthalic anhydride, and 1 part by weight of N-butyl imidazole.

The mixture was pre-cross-linked at 100°C during 1 hour, after which it was cross-linked at 165°C according to two methods :

A) in a heating plate oven (comparison test) ;

B) in a liquid phase, by dipping into perfluoropolyether having the structure of Fomblin® YR type and having the following properties ;

| | | |
|---|---|---|
| (viscosimetric) | | |
| average molecular weight | | 6000-7000 |
| density at 20° | | 1.92 g/ml |
| distillation range (0.5 m.bar) | > | 270°C |
| kinematic viscosity at 20°C | | 1000-2000 Cst ($mm^2/s$) |
| heat conductivity at 25°C | | 0.00021 cal/sec.cm.°C (0.00088 J/s.cm.°C) |
| surface tension at 20°C | | 21 dynes/cm (N x $10^{-5}$/cm). |

Moreover the above perfluoropolyether exhibits absolute chemical inertia and compatibility towards polymeric materials.

The results of tests carried out over different times are set forth in Table 1

TABLE 1

| Heating time (min.) | Glass transition (Tg) °C | |
|---|---|---|
| | Oven | Liquid phase |
| 1 | 55 | 70 |
| 3 | 65 | 98 |
| 8 | 137 | 148 |

2 hours in the oven and 13 minutes in the liquid phase were found to be required to achieve the highest value (Tg = 160°C).

The glass transition temperature was measured by differential thermal analysis at heating rate = 16°C/min.

EXAMPLE 2

There was prepared a mixture consisting of 100 parts by weight of an epoxy resin made from bisphenol A and epichlorohydrin, having epoxy equivalent weight equal to 190, 75 parts by weight of methyl-endomethylene-tetrahydrophthalic anhydride, and 1 part by weight of N-butyl imidazole.

The mixture was pre-cross-linked at 100°C during 1 hour, after which it was cross-linked at 190°C and 215°C, according to methods A and B described in Example 1.

The results are set forth in Table 2.

TABLE 2

| curing time | Tg (°C) | | | |
|---|---|---|---|---|
| | 190°C | | 215°C | |
| | oven | liquid phase | oven | liquid phase |
| 1 | 52 | 58 | 60 | 95 |
| 3 | 52 | 117 | 67 | 123 |
| 5 | 56 | 133 | 105 | 133 |
| 7 | 107 | 137 | - | - |

EXAMPLE 3

Two pressure sensitive adhesive tapes having a thickness of about 0.15 mm were stuck parallelly at a distance of 5 mm on polyester supports having a thickness of 0.2 mm, coated with a silica layer having a thickness of 0.25 mm.

A two component Epotek®H20 resin (containing Ag in the form of finely dispersed powder) was spread between the two tapes in order to form a deinite track. The resin was pre-treated at 50°C over 30 minutes, before being applied on a board.

The adhesive tapes were removed and the resin was cross-linked both in an oven and in a liquid phase as specified hereinbefore.

Two sets of tests were carried out, by heating the boards at 150°C in a heating plate oven and by dipping into perfluoropolyether of the kind described in Example 1.

The results are set forth in Table 3. The specimens were kept for 20 hours in a drier, before the measurements were carried out.

The volumetric resistivity was measured by Thiedig Milli-TO.2 method in a cell purpose built according to UNI 5608 method (measuring method type 4 electrode Kelvin), after having measured carefully the track size by means of a digital micrometer and a graduated optical visual apparatus.

TABLE 3

| curing time | Volume resistivity (Ω. cm/25°C) | |
|---|---|---|
| | oven | liquid phase |
| 1 | it does not polymerize | $0.5.10^{-4}$ |
| 5 | $0.6.10^{-4}$ | $0.5.10^{-4}$ |

EXAMPLE 3A

After having removed the adhesive tape from the polyester support as in example 3, two sets of tests were carried out, by heating the boards both in a heating plate oven at 160°C and in vapors of perfluoropolyethers belonging to class 1 described hereinbefore and having a distillation range of 158-167°C. The results are set forth in Table 4.

TABLE 4

| Heating time | Resistivity (ohm x cm.) | |
|---|---|---|
| | oven | vapor |
| 2 minutes | $1.80.10^{-4}$ | $1.28.10^{-4}$ |
| 1 minute and 30 sec. | it does not polymerize | $1.29.10^{-4}$ |
| 45 seconds | it does not polymerize | $1.30.10^{-4}$ |

The volumetric resistivity was measured according to the method indicated in example 3.

EXAMPLE 4

Example 3 was repeated, by heating the boards either in a heating plate oven or by dipping in perfluoropolyether phase at 175°C. The results are set forth in Table 5.

TABLE 5

| curing time | Volume resistivity ($\Omega$.cm/25 °C) | |
|---|---|---|
| | oven | liquid phase |
| 30 sec. | it does not polymerize | $0.5.10^{-4}$ |
| 1 min. | $1.6.10^{-4}$ | $0.5.10^{-4}$ |
| 5 min. | $0.5.10^{-4}$ | $0.5.10^{-4}$ |

EXAMPLE 5

A $C_2H_4$, $C_3H_6$, ethylidenenorbornene ENB terpolymer (65.5 ; 31 ; 3.5% by weight respectively), trade-mark Dutral Ter 038, was used to prepare a mix having the following composition :

| | | |
|---|---|---|
| elastomer EPDM | 100 | parts by weight |
| carbon black FEF | 55 | parts by weight |
| paraffin oil | 30 | parts by weight |
| zinc oxide | 5 | parts by weight |
| stearic acid | 1 | parts by weight |
| tetramethyl thiuram monosulfide | 1.5 | parts by weight |
| mercapto benzothiazol | 0.75 | parts by weight |
| sulfur | 1.5 | parts by weight |

The mix was extruded in shapes having a rectangular section of 35 × 1.5 mm., from which specimens were obtained, being about 10 cm in length. The specimens were cross-linked by dipping into a bath containing Fomblin YR, the characteristics of which are set forth in Example 1.

A set of tests were carried out at 3 different temperatures ; the results are set forth in Table 6. The measurements were obtained according to ASTM D412 (tensile stress, ultimate elongation, tension set).

TABLE 6

| T (°C) | time (sec) | Hardness (Shore) | tensile stress (MPa) | ultimate elongation (%) | tension set (%) |
|---|---|---|---|---|---|
| 190 | 65 | 45 | 12.5 | 420 | 13 |
| 190 | 120 | 49 | 16.0 | 360 | 10 |
| 215 | 20 | 33 | 11.5 | 450 | 14 |
| 215 | 40 | 44 | 13.2 | 400 | 13 |
| 215 | 65 | 48 | 15.5 | 360 | 11 |
| 240 | 10 | 45 | 12.0 | 430 | 12 |
| 240 | 20 | 47 | 14.1 | 390 | 11 |
| 240 | 40 | 47 | 14.0 | 350 | 11 |

When the reticulation was over, the specimens had a dry, unsticky aspect ; moreover they exhibited considerably better surface properties in comparison with those obtained by reticulation at the same temperature in a melted salt bath by percolation in vapor phase. In fact, cured articles were obtained, wherein total lack of bubbles and of surface roughness was noted.

EXAMPLE 6

Dicumyl peroxide (PEROXIMON DC®) as cross linking agent, triallyl cyanurate as co-cross linking agent and an antioxidant (ANOX HB®) were added to a "low density" polythene having melt flow index 2 according to the following formula :

| | |
|---|---|
| PE | 100 Parts by weight |
| Dicumyl peroxide | 2 Parts by weight |
| T AC | 0.5 Parts by weight |
| ANOX | 0.5 Parts by weight |

The "compound" was shaped obtaining a specimen having section 10 cm × 10 cm × 2 mm.

This shaped specimen was dipped into a bath containing FOMBLIN YR the characteristics of which are set forth in example 1.

The test was carried out at 165°C for 30 minutes. The measurements were obtained according to ASTM 2765-68 (Method A).

The weight loss due to the solvent for a non-cross linked specimen was 37.7% by weight, while the weight loss for the specimen treated according to the present invention was 3.9%. Said value is lower than the value for a cross linked specimen carried out by pressing.

## Claims

1. A process for curing vulcanizable materials, in particular thermosetting resins or vulcanizable elastomers or copolymers, comprising contacting an article to be cured with a process liquid at a pre-established temperature for a sufficient time in order to obtain complete vulcanization, characterized in that said liquid is a perfluoropolyether.

2. A process as claimed in Claim 1, characterized in that said thermosetting resins are epoxy, polyurethane, polyester, acrylic, polybutadiene, polyimide, thermoplastic resins.

3. A process as claimed in Claim 1, characterized in that said polymers are cross linkable polymers, such as polyolefins XLPE, CPE, CSM.

4. A process as claimed in any of Claims 1 to 3, characterised in the said perfluoropolyether has a kinematic viscosity from 10 to 2500 Cst ($mm^2/s$) at 20°C.

5. A process as claimed in any of Claims 1 to 4, characterized in that said perfluoropolyether has one or more structural units of the following kinds :

(1) $CF(CF_3)CF_2O$ and (CFXO) randomly distributed along the perfluoropolyethereal chain, wherein X is F or $CF_3$ ;

(2) $CF(CF_3)CF_2O$ ;

(3) $(CF(CF_3)CF_2O)$, and which comprises the characteristic group $-CF(CF_3)-CF(CF_3)-$ ;

(4) $(CF(CF_3)CF_2O)$, $(C_2F_4O)$, (CFXO) randomly distributed along the perfluoropolyethereal chain, wherein X is F or $CF_3$ ;

(5) $(C_2F_4O)$, $(CF_2O)$ randomly distributed along the perfluoropolyethereal chain ;

(6) $(CF_2-CF_2-CF_2O)$ ;

(7) $(C_2F_4O)$ ;

(8)

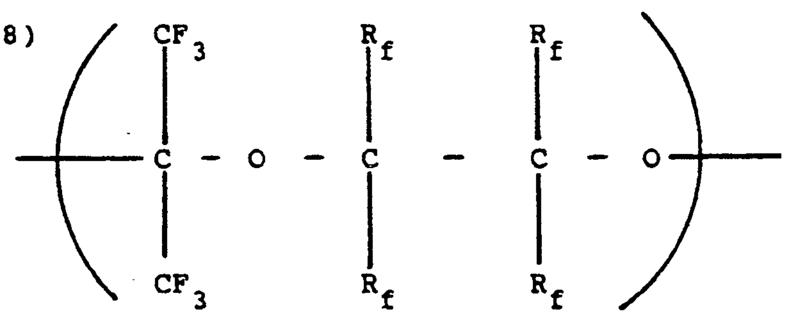

wherein $R_f$ is F or a perfluoroalkyl radical.

6. A process as claimed in claim 1 characterized in that said thermal vulcanization is carried out in combination, simultaneously or in sequence, with electronic radiations, U.V. rays, microwaves or supersonic energy, these alternative energy sources being used singly or together.

7. A process as claimed in claim 6, characterized in that said perfluoropolyether is as claimed in Claim 5.

## Ansprüche

1. Verfahren zum Härten von vulkanisierbaren Materialien, insbesondere wärmehärtenden Harzen oder vulkanisierbaren Elastomeren oder Copolymeren, das umfaßt: Zusammenbringen eines auszuhärtenden Gegenstandes mit einer Verfahrensflüssigkeit bei einer vorher festgelegten Temperatur für eine ausreichende Zeit, um eine vollständige Vulkanisation zu erhalten, dadurch gekennzeichnet, daß die Flüssigkeit ein Perfluorpolyether ist.

2. Verfahren nach Anspruch 1, dadurch gekennzeichnet, daß die wärmehärtenden Harze thermoplastische Epoxid-, Polyurethan-, Polyester-, Acryl-, Polybutadien- bzw. Polyimidharze sind.

3. Verfahren nach Anspruch 1, dadurch gekennzeichnet, daß die Polymeren vernetzbare Polymeren sind, wie Polyolefine vom Typ XLPE, CPE, CSM.

4. Verfahren nach irgendeinem der Ansprüche 1 bis 3, dadurch gekennzeichnet, daß der Perfluorpolyether eine kinematische Viskosität von 10 bis 2500 Cst ($mm^2/s$) bei 20°C hat.

5. Verfahren nach irgendeinem der Ansprüche 1 bis 4, dadurch gekennzeichnet, daß der Perfluorpolyether eine oder mehrere Struktur-einheiten der folgenden Arten aufweist :

(1) $CF(CF_3)CF_2O$ und (CFXO), statistisch entlang der Perfluorpolyetherkette verteilt, worin X F oder $CF_3$

ist ;
(2) $CF(CF_3)CF_2O$ ;
(3) $(CF(CF_3)CF_2O)$ und die charakteristische Gruppe $-CF(CF_3)-CF(CF_3)-$ umfassend ;
(4) $(CF(CF_3)CF_2O)$, $(C_2F_4O)$, $(CFXO)$, statistisch entlang der Perfluorpolyetherkette verteilt, worin X F oder $CF_3$ ist ;
(5) $(C_2F_4O)$, $(CF_2O)$, statistisch entlang der Perfluorpolyetherkette verteilt ;
(6) $(CF_2-CF_2-CF_2O)$ ;
(7) $(C_2F_4O)$ ;

(8)

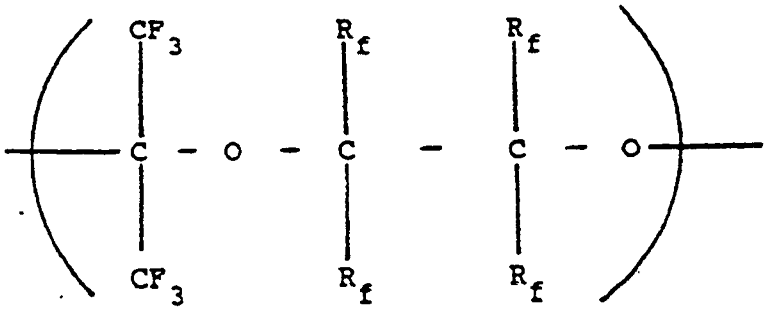

worin $R_f$ F oder ein Perfluoralkylrest ist.

6. Verfahren nach Anspruch 1, dadurch gekennzeichnet, daß die Wärmevulkanisation in Kombination (gleichzeitig oder in Aufeinanderfolge) mit elektronischer Strahlung, UV-Strahlen, Mikrowellen oder Überschallenergie durchgeführt wird, wobei diese alternativen Energiequellen einzeln oder gemeinsam verwendet werden.

7. Verfahren nach Anspruch 6, dadurch gekennzeichnet, daß der Perfluorpolyether der Definition in Anspruch 5 entspricht.

## Revendications

1. Un procédé pour durcir des matériaux vulcanisables, en particulier des résines thermodurcissables ou des élastomères ou copolymères vulcanisables, comprenant la mise en contact d'un article à durcir avec un agent liquide de traitement à une température pre-établie pendant un temps suffisant pour obtenir une vulcanisation complète, caractérisé en ce que ce liquide est un perfluoropolyéther.

2. Un procédé suivant la revendication 1, caractérisé en ce que ces résines thermodurcissables sont des résines époxy, polyuréthane, polyester, acryliques, polybutadiène, polyimide, des résines thermoplastiques.

3. Un procédé suivant la revendication 1, caractérisé en ce que ces polymères sont des polymères réticulables comme des polyoléfines XLPE, CPE, CSM.

4. Un procédé suivant l'une quelconque des revendications 1 à 3, caractérisé en ce que ce perfluoropolyéther a une viscosité cinématique de 10 à 2500 Cst ($mm^2/s$) à 20°C.

5. Un procédé suivant l'une quelconque des revendications 1 à 4, caractérisé en ce que ce perfluoropolyéther a une ou plusieurs unités structurales des types suivants :
(1) $(CF(CF_3)CF_2O)$ et $(CFXO)$ distribuées de façon aléatoire le long de la chaîne perfluoropolyéthérée, dans lesquelles X est $-F$ ou $-CF_3$ ;
(2) $(CF(CF_3)CF_2O)$ ;
(3) $(CF(CF_3)CF_2O)$, et qui comprend le groupe caractéristique $-CF(CF_3)-CF(CF_3)-$ ;
(4) $(CF(CF_3)CF_2O)$, $(C_2F_4O)$, $(CFXO)$ distribuées de façon aléatoire le long de la chaîne perfluoropolyéthérée, dans lesquelles X est $-F$ ou $-CF_3$ ;
(5) $(C_2F_4O)$, $(CF_2O)$ distribuées de façon aléatoire le long de la chaîne perfluoropolyéthérée ;
(6) $(CF_2-CF_2-CF_2O)$ ;
(7) $(C_2F_4O)$ ;

(8)

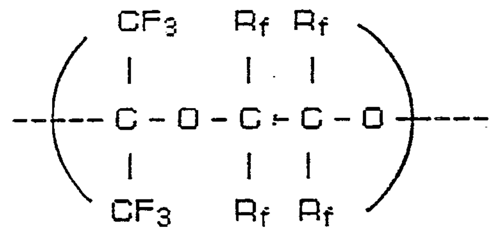

dans laquelle $R_f$ est –F ou un radical perfluoroalkyle.

6. Un procédé suivant la revendication 1, caractérisé en ce que cette vulcanisation thermique est effectuée en association, simultanément ou successivement, avec des radiations électroniques, des radiations UV, des microondes ou une énergie ultrasonore, ces autres sources d'énergie étant utilisées seules ou ensemble.

7. Un procédé suivant la revendication 6, caractérisé en ce que ce perfluoropolyéther est tel que défini dans la revendication 5.